# EUROPÄISCHE PATENTSCHRIFT

(11) **EP 1 613 700 B1**
(45) Veröffentlichungstag und Bekanntmachung des Hinweises auf die Patenterteilung: **17.08.2011**
(21) Anmeldenummer: 04727491.5
(22) Anmeldetag: 15.04.2004
(51) Int. Cl.: C08L 101/00, C08L 23/02, C08L 23/04, C08L 23/08, C08L 91/08

(54) **POLYMER NETZWERKE**
POLYMER NETWORKS
RESEAUX POLYMERES

(30) Priorität: 15.04.2003 DE 10317418
(43) Veröffentlichungstag der Anmeldung: 11.01.2006
(73) Patentinhaber: InnoGEL AG, 6331 Hünenberg (CH)
(72) Erfinder: MÜLLER, Rolf, CH-8055 Zürich (CH); INNEREBNER, Federico, CH-8049 Zürich (CH)
(74) Vertreter: Becker Kurig Straus
(86) Internationale Anmeldenummer: PCT/CH2004/000230
(87) Internationale Veröffentlichungsnummer: WO 2004/092280

(56) Entgegenhaltungen:
- EP-A- 0 341 188
- EP-A- 0 385 599
- EP-A- 0 699 710
- GB-A- 849 389
- US-A- 3 522 198

## Beschreibung

Die vorliegende Erfindung betrifft Polymermischungen enthaltend ein erstes langkettiges Polymer und ein zweites kurzkettiges Polymer, wobei die Strukturparameter der beiden Polymere so aufeinander abgestimmt sind, dass bei geeigneten Herstellungsbedingungen der Polymermischung infolge Netzwerkbildung unter Heterokristallisation ein Polymerer Werkstoff erhalten wird, der bezüglich der mechanischen und teilweise auch bezüglich der thermischen Eigenschaften im Vergleich zum ersten Polymer bei erleichterter Verarbeitbarkeit bessere Werte aufweist.

Die EP 0 699 710 A1 beschreibt eine aus zwei Phasen bestehende Struktur. Die erste Phase bildet ein Hohlräume aufweisendes mikroporöses Netz aus einem Ethylen-Propylen-Copolymer, während die zweite Phase aus einem niedermolekularen Material besteht, das in den Hohlräumen eingeschlossen ist. Die Grösse der Hohlräume liegt im Bereich 10-20µm, während die Wanddicke oder Strangdicke des Netzes der ersten Phase im Bereich von 1-5µm liegt. Es liegt hier keine molekulardisperse Mischung vor, sondern es liegt eine schaumartige oder schwammartige Zwei-Phasen-Mischung vor.

Die GB 849 389 beschreibt eine Mischung aus einem Olefin-Polymer und einem mikrokristallinen Wachs. Damit wird eine Absenkung der Schmelzeviskosität erreicht, die für viele Giessanmeldungen vorteilhaft ist. Dabei spielt die Art der Herstellung (z.B. Mischen im Zweiwellen-Extruder) für die Absenkung der Schmelzenviskosität (bzw. Erhöhung des Schmelzfluss-Indexes MFI) eine untergeordnete Rolle. Massgeblichen Einfluss hat hier die Konzentration des beigemischten Wachses. Bei der hier beschriebenen Mischung wird zwar die Schmelzeviskosität abgesenkt aber dennoch wird nur eine geringe Erhöhung der Zugfestigkeit erzielt und zwar eine maximale Erhöhung der Zugfestigkeit von nur etwa 4% mit einem Wachs/Polyethylen-Verhältnis von 10,0190,0. Es findet keine nennenswerte Netzwerkbildung zwischen dem Wachs und dem Polyethylen statt.

Die US 3,522,198 beschreibt eine modifizierte Polypropylen-zusammensetzung, die ein Polypropylen sowie ein Paraffin-Wachs, ein mikrokristallines Wachs oder ein niedermolekulares Polyethylen als Paraffin aufweist. Damit lässt sich die Abriebfestigkeit des Polypropylens steigern, ohne die Zugfestigkeit nennenswert zu verändem. In den genannten Beispielen werden stets inkompatible Komponenten vermischt, und zwar Polypropylen (PP) und mindestens eine Sorte Polyethylen. Durch dieses "Kreuzen" zweier inkompatibler (d.h. unterschiedliche Monomere aufweisender) Komponenten können ebenfalls keine nennenswerten Steigerungen der Zugfestigkeit (und des E-Moduls) einer solchen Polymermischung erzielt werden.

Die EP 0 341 188 beschreibt Polyolefin-Filme mit verbesserten Barriere-Eigenschaften. Dies wird durch eine ähnliche Massnahme wie bei dem US-Patent des vorhergehenden Absatzes erreicht, indem man das Polyolefin mit einem Wachs vermischt, wobei das Wachs (z.B. Paraffin) mit dem Polyolefin (z.B. Polypropylen oder Polybuthylen) inkompatibel ist. Somit sind auch hier keine nennenswerten Steigerungen der Zugfestigkeit (und des E-Moduls) möglich.

Die EP 0 385 599 beschreibt einen Film sowie eine Polymer-Zusammensetzung für diesen Film. Es werden Massnahmen beschrieben, um die Klebrigkeit des Films herabzusetzen. Hierzu erfährt man aber lediglich, dass das Wachs vorzugsweise ausreichend kompatibel sein soll und homogen in die Zusammensetzung eingemischt werden soll und nicht dazu neigen soll, an die Oberfläche zu migrieren. Eine konkrete Massnahme für die Auswahl einer Wachs/Polymer-Kombination bzw. einer Charakterisierung der Wachs-Moleküle findet man auch hier nicht.

### Kurze Beschreibung der Erfindung

Das erste Polymer P(i) ist ein beliebiges synthetische Polymer mit einem Polymerisationsgrad DP > 500, das zumindest eine minimale Kristallinität aufweist. Es kann sowohl linear sein, als auch Kurz- und Langkettenverzweigungen aufweisen. Es kann ein Homopolymer, ein Copolymer, ein Terpolymer oder ein höheres Polymer sein, vorausgesetzt mindestens eine Art der unterschiedlichen Monomereinheiten sind mindestens teilweise in Sequenzen angeordnet. Eine Sequenz wird hier als ein Abschnitt eines Polymers verstanden, der aus denselben Monomereinheiten und aus mindestens etwa 20 solcher Monomereinheiten aufgebaut ist (d.h. der Polymerisationsgrad von sich wiederholenden Einheiten der Sequenzen DPs ist etwa > 20), weder Kurz- noch Langkettenverzweigungen aufweist und für diesen Abschnitt auch bezüglich der Konformation die Voraussetzungen für die Kristallisation solcher Sequenzen gegeben sind. Eine Sequenz kann in der Hauptkette und/oder in einer Seitenkette angeordnet oder auch eine Seitenkette sein. Beim Abkühlen aus der Schmelze weisen solche Polymere zumindest eine minimale Kristallinität auf.

Das zweite Polymer P(j) ist entweder linear oder nahezu linear (P(j)1) und besteht dann im Wesentlichen aus einer Sequenz, die aus denselben Monomereinheiten aufgebaut ist wie die Sequenzen des Polymers P(i). Andererseits kann das Polymer P(j) auch einige Verzweigungen aufweisen (P(j)2), wobei die Kettenabschnitte dann aus Sequenzen bestehen, die aus denselben Monomereinheiten aufgebaut sind wie die Sequenzen des Polymers P(i). Wird P(j)1 aus der Schmelze abgekühlt oder aus einer Lösung ausgefällt, so entstehen Kristallite, wobei die Makromoleküle P(j)1 in gestreckter Konformation vorliegend üblicherweise Lamellen bilden, sodass die Lamellendicke identisch mit der Länge der Makromoleküle P(j)1 ist. Da zwischen den Lamellen kaum Verbindungen in Form von Makromolekülen, die in mindestens zwei Lamellen eingebaut sind, existieren ist der Zusammenhalt dieser Lamellen minimal und trotz hoher Kristallinität sind die mechanischen Eigenschaften von solchen Kristallagglomeraten, insbesondere Festigkeit und Bruchdehnung, gering. Bei P(j)2 ist die Situation bezüglich der Sequenzen vergleichbar wie bei P(j)1, wobei jedoch infolge der kovalenten Verknüpfung der Sequenzen von P(j)2 Verbindungen zwischen den Lamellen bestehen. Im Folgenden wird die Erfindung der Übersicht halber bezüglich P(j)1 beschrieben, die Diskussion ist jedoch analog auf P(j)2 übertragbar, wobei die Bedingungen an P(j)1 dann für die Sequenzen von P(j)2 gelten. Der Einsatz von zweiten Polymeren der Art P(j)2 ist insofern sinnvoll, als dadurch die Anzahl der Verknüpfungen zwischen Heterokristalliten erhöht werden kann und insbesondere engmaschige Netzwerke gebildet werden. In Gegenwart eines Quellungsmittels kann dadurch der Quellgrad beeinflusst, insbesondere reduziert werden.

Die vorliegende Erfindung beschreibt die notwendigen Voraussetzungen bezüglich der Strukturgrössen von P(i) und P(j), sowie die Bedingungen der Herstellung von geeigneten Mischungen davon, damit diese beiden Polymere gemeinsam unter Heterokristallisation kristallisieren können, wobei das infolge der kurzen Kettenlänge sehr gut kristallisierbare P(j) Kristallinität bei P(i) induziert und ein Netzwerk entsteht, dessen Verknüpfungspunkte Heterokristallite von P(i) und P(j) sind und dessen Verbindungselemente aus Kettensegmenten von P(i) bestehen. Bei geeigneten Herstellungsbedingungen kann aus der Mischung von P(i) und P(j) ein Werkstoff erhalten werden, der gegenüber P(i) eine höhere Kristallinität, einen höheren E-Modul, eine höhere Yieldspannung, eine höhere Bruchdehnung und sogar einen höhere Schmelztemperatur aufweist, während die Viskosität der Schmelze deutlich reduziert, bzw. der MFI deutlich erhöht wird, die Schmelze somit einfacher verarbeitet werden kann. Wird die Kombination von P(i) und P(j) in Gegenwart eines Quellungsmittels verarbeitet oder nachträglich gequollen, können Gele erhalten werden, wobei die Netzwerkdichte bzw. der Quellgrad durch den Anteil an P(j) eingestellt werden kann.

Das dieser Erfindung zugrunde liegende Prinzip wird hier für Polyolefine, insbesondere für Polyethylene erläutert, ist jedoch auch auf weitere Polymere analog anwendbar, wobei der Zusammenhang zwischen Sequenzlänge DPs und Schmelzpunkt bzw. Lamellendicke für die individuellen Polymere spezifisch sind. Eine ausführliche Beschreibung für Polyvinylalkohol Systeme ist in einer kopendenten Patentanmeldung enthalten.

### Ausführliche Beschreibung der Erfindung

### P(i)

Damit effektive Verbindungen zwischen den Heterokristalliten gebildet werden können, ist der Polymerisationsgrad DP(P(i)) etwa > 500, vorzugsweise > 1000, noch bevorzugter > 3000, am bevorzugten > 5000, wobei der Polymerisationsgrad als die Anzahl der kleinsten sich wiederholenden Einheit verstanden wird, bei PE ist dies die Einheit -(CH₂)-. Mit dem Polymerisationsgrad steigt die Güte des Netzwerks, insbesondere die Yieldspannung und die Bruchdehnung.

Der Polymerisationsgrad der kristallisierbaren Sequenzen von P(i), DPs(P(i)) ist > 20, vorzugsweise > 30, noch bevorzugter > 40, am bevorzugtesten > 50, Mit zunehmendem DPs(P(i)) nimmt die Kristallinität von P(i) sowie der Schmelzpunkt Tm dieser Kristallite zu. Bei PE gilt etwa folgende Korrelation. Bis zu DPs(P(i)) von rund 150 werden die Sequenzen in der gestreckten Konformation in die Kristallite eingebaut, wobei der Schmelzpunkt mit der Lamellendicke L zunimmt. Bei höheren DPs(P(i)) nimmt Tm unter üblichen Kristallisationsbedingungen nur noch minimal zu, da eine Rückfaltung der Sequenzen stattfindet, also die Sequenzlänge ein Mehrfaches der Lamellendicke betragen kann. Mit der Wahl einer bestimmten Sequenzlänge ist also die Schmelztemperatur in etwa festgelegt.

Bezüglich PE können grundsätzlich alle Typen, welche die obigen Bedingungen erfüllen eingesetzt werden, d.h. VLDPE, LLDPE, LDPE, HDPE, sowie Copolymere wie bsw. EVA oder Terpolymere und höherer Polymere. Bei VLDPE liegt DPs im Bereich 7 - 25, sodass nur VLDPE mit DPs > 20 sinnvoll eingesetzt werden können. Bei LLDPE liegt DPs im Bereich 25 - 100, sodass hier das ganze Spektrum einsetzbar ist. Dies ist auch bei LDPE und HDPE der Fall. Allerdings sind typische HDPE aufgrund des sehr geringen Anteils an Seitenketten (nur rund 2 pro 1000 C-Atome in der Kette) sehr gut kristallisierbar, sodass die positiven Effekte bezüglich der mechanischen Eigenschaften, welche bei den anderen PE entstehen bei HDPE weniger zutreffen. Die Technologie kann jedoch auch bei HDPE sinnvoll sein um dessen MFI und somit die Verarbeitbarkeit zu erhöhen oder für spezielle Anwendungen, wo der Anteil an P(j) sehr hoch ist, bsw. 50% sodass die Schmelze der Mischung eine sehr niedrige Viskosität aufweist und frei giessbar wird und diese Mischung als Giessharz eingesetzt werden kann, welches beim Erkalten aushärtet, ohne dass eine chemische Vernetzung stattfinden muss, wie dies bei üblichen Giessharzen der Fall ist (z.B. Polyester Harze, Epoxid Harze).

### P(j) und geeignete Kombinationen von P(j) mit P(i)

Der Polymerisationsgrad DP(P(j)) ist > 20, vorzugsweise > 30, noch bevorzugter > 40, am bevorzugtesten > 50, wobei auch hier der Polymerisationsgrad als die Anzahl der kleinsten sich wiederholenden Einheit verstanden wird. Der maximale Polymerisationsgrad DP(P(j) ist etwa < 500. Bei P(j) ist die Sequenzlänge bei vollständiger Linearität, welche bevorzugt ist, identisch mit dem Polymerisationsgrad. Bei P(j) nimmt Tm mit DP(P(j)) kontinuierlich zu, allerdings liegen die Schmelztemperaturen bei tieferen Werten als bei P(i) wenn DPs(P(i)) vergleichbar ist mit DP(P(j)), bei PE bsw. bei rund 10°C tieferen Werten. Dies ist wahrscheinlich auf unterschiedliche Grenzflächenspannungen zurückzuführen.

Vorteilhafte synergistische Effekte infolge der Heterokristallisation von P(i) und P(j) entstehen insbesondere dann, wenn DPs(P(i)) in etwa vergleichbar ist mit DP(P(j)), d.h. vorzugsweise ist 0,1xDP(P(j)) < DPs(P(i)) < 10xDP(P(j)), noch bevorzugter 0,3xDP(P(j)) < DPs(P(i)) < 7xDP(P(j)), am bevorzugtesten 0,5xDP(P(j)) < DPs(P(i)) < 5xDP(P(j)). Eine Ausnahme besteht bsw. bei Giessharzen, wo DPs(P(i)) auch noch sehr viel grösser sein kann als DP(P(j)).

Ein tiefer DP(j) ist einerseits vorteilhaft, da mit abnehmendem Molekulargewicht die Beweglichkeit der Makromoleküle und damit die Kristallisationsgeschwindigkeit sowie der Kristallisationsgrad zunimmt. In der Kombination mit dem langsamer kristallisierenden P(i) wird das Kristallisationsverhalten von P(j) auf P(i) induziert. Erstaunlicherweise wurde gefunden dass wenn Tm(P(i)) > Tm(P(j)) die Heterokristallite dann einen Schmelzpunkt um Tm(P(i)) aufweisen, d.h. der Vorteil der hohen Kristallisationsgeschwindigkeit und des hohen Kristallisationsgrades von P(j) wird dann mit dem Vorteil des höheren Schmelzpunktes von P(i) kombiniert. Ist umgekehrt Tm(P(i)) < Tm(P(j)) kann ein Schmelzpunkt der Heterokristallite um Tm(Pj)) erhalten werden, d.h. die Heterokristallite weisen dann etwa den Schmelzpunkt der höher schmelzenden Komponente auf. Somit kann Tm(P(i)) durch einen Anteil an P(j) erhöht werden.

P(j) wird bezogen auf P(i) und P(j) in Anteilen in Gew.% im Bereich von etwa 1 - 50, vorzugsweise 2 - 40, noch bevorzugter 3 - 30, am bevorzugtesten 4 - 25 eingesetzt. Bei frei giessbaren Giessharzen liegt der Anteil etwa im Bereich 10 - 95, vorzugsweise 15 - 90, noch bevorzugter 20 - 85, am bevorzugtesten 25 - 80.

### Mischverfahren

Damit P(i) und P(j) unter Heterokristallisation vorteilhafte Netzwerke bilden können, ist die Herstellung einer Schmelze, wobei die Komponenten in molekulardisperser Verteilung vorliegen, eine notwendige Voraussetzung. Da P(i) und P(j) üblicherweise im geschmolzenen Zustand extrem unterschiedliche Viskositäten aufweisen, wobei P(i) typischerweise eine hochviskose thermoplastische Schmelze bildet und P(j) mit einer Viskosität in der Grössenordnung von Wasser vorliegt, ist die Herstellung einer molekulardispersen Mischung dieser Komponenten problematisch. Ist die Mischung unzureichend, werden die Vorteile der Kombination von P(i) und P(j) nur teilweise oder gar nicht herhalten, insbesondere entstehen separierte Phasen, wodurch bsw. die Bruchdehnung massiv reduziert wird.

Die Polymere P(i) und P(j) liegen typischerweise als Pulver oder Granulat vor. Werden diese Komponenten einer thermoplastischen Verarbeitung, bsw. mittels Extrusion, zugeführt, so schmilzt P(j) üblicherweise zuerst und es entsteht eine dünnflüssige Flüssigkeit, vergleichbar geschmolzenem Kerzenwachs. P(i) andererseits benötigt für den Schmelzvorgang auch Scherkräfte, wobei mechanische Energie in thermische Energie umgewandelt und so eine hochviskose thermoplastische Schmelze erhalten wird. Werden P(i) und P(j) zusammen dem Mischprozess zugeführt, bildet das dünnflüssige P(j) einen Film um die Granulatkörner oder die Pulverpartikel von P(i), wodurch kaum mehr Scherkräfte auf P(i) übertragen werden können. Diese Problematik ist beim Einsatz von Granulat ausgeprägter als bei Pulver und nimmt in beiden Fällen mit dem Anteil an P(j) zu. Um trotzdem eine ausreichende Mischung zu erhalten sind lange Mischzeiten notwendig und müssen spezielle Extruderkonfigurationen eingesetzt werden, z.B. Zweiwellenextruder mit Knetblöcken und/oder rückfördernden Elementen. Mit einfachen Einwellenextrudern wie bsw. Formextrudern, die für übliche Plastifizierungsvorgänge ausreichen und nicht mit speziellen Mischteilen ausgestattet sind, kann eine genügend molekulardisperse Mischung nicht erreicht werden. Doch auch mit speziell ausgelegten Extrudern ist die Mischung von P(i) und P(j), insbesondere bei hohen Anteilen an P(j) problematisch. Dann ist es vorteilhaft, P(i) zuerst separat mindestens teilweise zu plastifizieren und dann P(j) zu der bereits bestehenden Schmelze von P(i) zuzuführen, oder P(j) stufenweise zuzuführen, bsw. einen ersten Anteil zusammen mit P(i) und dann einen zweiten Anteil zu der ersten Schmelze aus P(i) und dem ersten Anteil an P(j), wobei dadurch die Viskosität der ersten Schmelze gegenüber einer Schmelze von P(i) bereits stark reduziert wird und so die Einarbeitung des zweiten, typischerweise grösseren Anteils erleichtert wird.

Eine weitere Verarbeitungsmöglichkeit bestehen darin, dass aus P(i) und P(j) auf einem speziell ausgerüsteten Mischer ein Masterbatch mit hohem Anteil an P(j) hergestellt wird, der dann bsw. granuliert wird. Dieses Granulat (oder Pulver) kann dann mit Granulat oder Pulver von P(i) einfach zusammen verarbeitet werden, da die Viskosität des Masterbatch Materials sehr viel näher bei der Viskosität von P(i) liegt als bei P(j).

Die erfindungsgemässe Polymermischung enthält mindestens ein synthetisches erstes Polymer P(i) und mindestens ein zweites Polymer P(j) und gegebenenfalls ein Quellungsmittel für P(i) und/oder P(j), wobei das Polymer P(i) einen Polymerisationsgrad DP(P(i)) > 500 und mindestens eine Art von kristallisierbaren Sequenzen A mit einem Polymerisationsgrad DPs(P(i)) dieser Sequenzen > 20 aufweist und das Polymer P(i) aus denselben Monomereinheiten aufgebaut ist wie die Sequenzen A von P(i) und der Polymerisationsgrad DP(P(j)) von P(j), 20 < DP(P(j)) < 500 ist und die Polymermischung ein aus einer molekulardispersen Mischung enthaltend P(i) und P(j) unter Heterokristallisation ausgebildetes Netzwerk aufweist.

Die erfindungsgemässe Polymermischung kann mindestens eine der folgenden Eigenschaften aufweisen:
1) Bei vergleichbaren Verarbeitungsbedingungen von P(i) und von P(i)+P(j) gilt, dass
   a) der Quotient des E-Modul E(i,j) von P(i)+P(j) und des E-Moduls E(i) von P(i), E(i,j)/E(i) > 1,1, vorzugsweise > 1,3, noch bevorzugter > 1,5, am bevorzugtesten > 2,0 und jeweils < 4 ist; und/oder
   b) der Quotient der Yieldspannung sy(i,j) von P(i)+P(j) und der Yieldspannung sy(i) von P(i), sy(i,j)/sy(i) > 1,1, vorzugsweise > 1,2, noch bevorzugter > 1,3, am bevorzugtesten > 1,5 und jeweils < 3,0 ist; und gegebenenfalls
   c) bei einem Anteil A(j) von P(j) bezogen auf P(i)+P(j) in Gew.% innerhalb des Intervals 1 < A(j) < 15 der Quotient der Bruchdehnung eb(i,j) von P(i)+P(j) und der Bruchdehnung eb(i) von P(i), eb(i,j)/eb(i), > 1,01, vorzugsweise > 1,03, noch bevorzugter > 1,05, am bevorzugtesten > 1,10 und jeweils < 1,5 ist.
2) Bei der erfindungsgemässen Polymermischung verhält sich der Quotient des MFI(i,j) der Mischung von P(i)+P(j) und des MFI(i) von P(i) so, dass MFI(i,j)/MFI(i) > 1,2, vorzugsweise > 1.5, noch bevorzugter > 2,0, am bevorzugtesten > 3 und jeweils < 500 ist
3) Bei der erfindungsgemässen Polymermischung ist bei vergleichbaren Verarbeitungsbedingungen von P(i) und von P(i)+P(j) der Quotient der Kristallinität K(i,j) von P(i)+P(j) und der Kristallinität K(i) von P(i), K(i,j)/K(i) > 1,03, vorzugsweise > 1,05, noch bevorzugter > 1,1, am bevorzugtesten > 1,2 und jeweils < 3.
4) Der Anteil A(j) von P(j) bezogen auf P(i)+P(j) in Gew.% liegt im Bereich 1 < A(j) < 90, vorzugsweise 2 < A(j) < 85, noch bevorzugter 3 < A(j) < 80, am bevorzugtesten 5 < A(j) < 75.
5) P(i) besitzt einen Verzweigungsgrad < 3x10⁻², vorzugsweise < 1x10⁻², noch bevorzugter < 5x10⁻³, am bevorzugtesten < 1×10⁻³, und P(j) besitzt einen Verzweigungsgrad < 5x10⁻², vorzugsweise 1x10⁻³, noch bevorzugter <1x10⁻³, am bevorzugtesten < 1x10⁻⁴.
6) P(j) weist eine Polydispersität < 30, vorzugsweise < 20, noch bevorzugter < 10, am bevorzugtesten < 5 auf.
7) P(i) und/oder P(j) besitzen Langketten-Verzweigungen, die einen Polymerisationsgrad > 20, vorzugsweise > 30, noch bevorzugter > 40, am bevorzugtesten > 50 aufweisen.
8) P(i) bzw. die Sequenzen A von P(i) ist ein Polyolefin, insbesondere ein Polypropylen oder Polyethylen wie VLDPE, LDPE, LLDPE, HDPE, HMWPE, UHMWPE.
9) P(i) ist ein Polyolefin, und P(j) wird aus folgenden Gruppen ausgewählt: n-Alkane CₙH₂ₙ₊₂; Iso-Alkane; zyklische Alkane CₙH₂ₙ; Polyethylen-Wachse; Paraffine und Paraffin-Wachse mineralischen Ursprungs wie makrokristalline, intermediate oder mikrokristalline Paraffine, spröde, duktile, elastische oder plastische mikrokristalline Paraffine; Paraffine und Paraffin-Wachse synthetischen Ursprungs; hyperverzweigte-Alpha-Olefine; Polypropylen-Wachse.
10) P(j) hat eine Dichte in g/cm³ von > 0,9, vorzugsweise > 0.925, noch bevorzugter > 0,950, insbesondere > 0,970, am bevorzugtesten > 0,980, und/oder P(j) hat einen Schmelz- oder Tropfpunkt in °C von > 80, vorzugsweise > 100, noch bevorzugter > 110, insbesondere > 120, am bevorzugtesten > 125.
11) Die erfindungsgemässe Polymermischung wird in Form einer thermoplastischen Schmelze mittels eines dispersiv und distributiv wirkenden Mischaggregates hergestellt, insbesondere mittels eines Zweiwellenextruders oder eines Einwellenextruders mit Mischteil oder mittels eines Busskokneters. Sie kann nach der Aufbereitung in Form von Granulat, Pellets, Pulver, Makro- oder Mikro-Fasem, als Film, Gussteil, Stranggussteil, Extrudat, Thermoformteil und dergleichen vorliegen.

### Beispiele

### Herstellung der Polymermischungen

### Brabender Kammerkneter

Bei einer Kammertemperatur von 170°C wurde zuerst das Polymer P(i) plastifiziert und in die Schmelze von P(i) dann das Polymer P(j) über einen Zeitraum von etwa 2min zugegeben. Die Drehzahl lag bei 100upm, die Gesamtmischzeit wurde zwischen 5 und 10min variiert. Die Massentemperaturen lagen im Bereich von 170 - 195°C, wobei mit zunehmendem Anteil an P(j) zunehmend tiefere Massentemperaturen erreicht wurden. Die Mischung wurde in einer Plattenpresse bei 180°C zu Filmen von 0,5mm gepresst, 5min bei dieser Temperatur belassen, wonach die Presse bei maximalem Kühlwasserdurchsatz schnell abgekühlt wurde.

### Zweiwellenextruder

Es wurde ein 30mm gleichdrehender dichtkämmender Zweiwellenextruder mit 36UD mit einer Strangdüse eingesetzt (vergl. Darstellung 8). Die Gehäusetemperaturen waren G1=60°C (Einzugszone für P(i)), G2=150°C (Einzugszone für P(i)), G3 - G4 = 180°C (Aufschmelzzone), G5 = 180°C (Einzugszone für P(j)), G6 - G7 = 180°C (Mischzone), G8 = 180°C (Austragszone), Düse = 185°C, die Drehzahl lag bei 300upm. P(i) wurde als Granulat zudosiert, ab G4 lag eine homogene Schmelze von P(i) vor. Im Gehäuse 5 wurde das Polymer P(j) in Form von Granulat zugegeben, das schnell geschmolzen und in G6 - G7 mit P(i) zu einer homogenen Schmelze gemischt wurde. Die Zugabe von P(j) in Form von Pulver bewirkte keine signifikante Änderung der Produkteigenschaften, ebenso die Zugabe von P(j) im bereits geschmolzenen Zustand. Für die Herstellung einer 7% Mischung waren die Dosierraten 22kg/h für P(i) und 1,655kg/h für P(j). Die erhaltene Schmelze wurde wie beim Brabender Verfahren beschrieben zu Pressplatten geformt. Untersucht wurde auch die Granulation des Stranges, welcher dann über ein Wasserbad gekühlt und mit einer Stranggranulationsvorrichtung granuliert werden konnte. Weiter wurde die Schmelze über eine Schlitzdüse zu Bändern geformt. Insgesamt konnten homogene molekulardisperse Mischungen bis 30% Anteil an P(j) relativ einfach erhalten werden. Bei höheren Anteilen an P(j) wurde eine Aufsplittung der Zudosierung von P(j) eingesetzt (vergl. Darstellung 9). Hierbei wurde ein erster Teil von P(j) mit P(i) homogen gemischt und dann der zweite Teil von P(j) in diese Mischung zudosiert und damit homogen gemischt. Durch die Reduktion der Viskosität der Schmelze nach dem ersten Mischvorgang war der zweite Mischvorgang deutlich erleichtert. Alternativ dazu wurde in einem ersten Schritt eine erste Mischung hergestellt und zu einem Vorcompound bzw. Masterbatch granuliert (vergl. Darstellung 10), wonach dieses Vorcompound in einem zweiten Schritt erneut plastifiziert wurde und ein zweiter Anteil an P(j) zugemischt wurde. Auch mit dieser Verfahrensvariante konnten hohe Anteile an P(j) erreicht werden, wie sie insbesondere für die Herstellung von (niedrigviskosen) Giessharzen benötigt werden.

### Einwellenextruder

Es wurde ein 40mm Einwellenextruder (Formextruder) eingesetzt (vergl. Darstellung 11). Die Einzugszone lag bei Raumtemperatur, die anderen Zonen bei 180°C, die Drehzahl bei 250upm. Die Polymere P(i) und P(j) wurden in Pulverform vorgängig mit einem Trommelmischer gemischt und diese Mischung wurde mit 12,4kg/h dosiert. Ober die Metering- und Mischzone werden die Komponenten aufgeschmolzen und gemischt. Die Schmelze wurde über eine Lochdüse als Strang erhalten und wie beim Brabender Verfahren beschrieben zu Filmen gepresst. Die Eigenschaften der Produkte im Vergleich mit den mittels eines Zweiwellenextruders erhaltenen Produkten waren deutlich schlechter. Beim Einsatz eines Einwellenextruders mit Metering- und Mischteil waren die Resultate in etwa vergleichbar mit den Produkten erhalten mit dem Brabender Verfahren bei längerer Mischzeit.

### Analysen

Für die Analyse der mechanischen Eigenschaften wurde ein Instron Tensile Tester 4500 eingesetzt. Die Proben wurden aus den Filmen ausgestanzt. Die Messlänge war 13mm, die Breite 2mm und die Dehngeschwindigkeit 100mm/min. Die Schmelzpunkte wurden mit einem Perkin-Elmer 7 DSC an Filmproben beim ersten Aufheizvorgang als Peak Temperaturen bestimmt, die Heizrate lag bei 20°C/min.

### Eigenschaften der Polymermischungen

In Darstellung 1 sind die E-Moduli in Funktion des Anteils an P(j) (PE-Wachs mit Molekulargewicht 500 und einer Polydispersität P von 1,1) bei LDPE (P(i)) mit einer Dichte von 0,917g/cm³ für die verschiedenen Mischverfahren wiedergegeben. In allen Fällen ist eine Zunahme des E-Moduls mit dem Anteil an P(j) festzustellen, wobei diese Zunahme bei der Herstellung der Polymermischung mittels eines Zweiwellenextruders (erfindungsgemäß) mit Mischteil deutlich ausgeprägter ist als bei den anderen Mischverfahren. Wird die Mischung mittels eines Brabender Kneters (nicht erfindungsgemäß) hergestellt ist eine deutliche Abhängigkeit von der Mischzeit festzustellen. Nach 15min Mischzeit werden vergleichsweise hohe E-Moduli erhalten, während nach 5min Mischzeit die E-Moduli deutlich tiefer liegen und vergleichbar sind mit den E-Moduli bei der Extrusion mit einem Einwellenextruder. Diese Unterschiede im E-Modul sowie der weiteren mechanischen Eigenschaften sind in der mehr oder weniger ausgeprägten Homogenität der Mischung von P(i) und P(j) begründet und zeigen deutlich den Einfluss des eingesetzten Mischverfahrens. Ein weiterer Vorteil beim Einsatz eines Zweiwellenextruders besteht darin, dass die typischen Mischzeiten mit 0,5 - 3min relativ kurz sind und somit der Einfluss von thermischer Degradation minimal ist. Der Unterschied der mechanischen Eigenschaften zu den mittels eines Brabender Kneters während 15min Mischzeit hergestellten Mischungen dürfte mindestens zu einem Teil in der thermischen Degradation während der langen Mischzeit begründet sein.

In Darstellung 2 sind die Yieldspannungen für die verschieden hergestellten Mischungen aufgeführt. Dieser Parameter ist offenbar noch ausgeprägter abhängig vom eingesetzten Mischverfahren. Nach der Herstellung der Mischung mittels eines Zweiwellenextruders (erfindungsgemäß) und etwas weniger ausgeprägt auch nach der Herstellung mittels eines Brabender Kneters (nicht erfindungsgemäß) bei einer Mischzeit von 15min ist eine ausgeprägte Zunahme der Yield Spannung zu verzeichnen, während dieser Effekt bei den anderen Mischverfahren vergleichsweise gering ausfällt.

In Darstellung 3 sind die Bruchdehnungen der verschieden hergestellten Mischungen aufgeführt (Brabender Kneter: nicht erfindungsgemäß; Einwellenextruder und Zweiwellenextruder: erfindungsgemäß). Bei den besseren Mischverfahren wird überraschenderweise mit dem Anteil an P(j) sogar eine Zunahme der Bruchdehnung erhalten. Dies ist erstaunlich, da üblicherweise eine Zunahme des E-Moduls und der Yield Spannung mit einer Abnahme der Bruchdehnung verbunden ist. Dieser Effekt ist wahrscheinlich darin begründet, dass die Heterokristallite hochdispers verteilt aus einer molekulardispersen Mischung von P(i) und P(j) entstanden und gut untereinander vernetzt sind, bezüglich der kristallinen und amorphen Phase ein feinkörniges Gefüge vorliegt und keine Phasenseparation von P(i) und P(j) besteht. Der Vorteil der Aufbereitung der Mischung mittels eines Zweiwellenextruders wird beim Verhalten der Bruchdehnung der Mischung besonders deutlich.

Weitere analoge Versuche wurden mit einer Auswahl an verschiedenen PE-Wachsen und Paraffinen durchgeführt, wobei grundsätzlich ein analoges Verhalten beobachtet werden konnte, der Einfluss auf MFI und die mechanischen und thermischen Eigenschaften jedoch vom individuellen Wachs abhängig war. Auch bei weiteren PE und PP (wobei hier Polypropylen Wachse eingesetzt wurden) wurden analoge Modifizierungen der Eigenschaftsprofile erhalten.

In Darstellung 4 ist der Einfluss von P(j) (PE-Wachs mit Molekulargewicht 500 und einer Polydispersität P von 1,1) auf den MFI von P(i) (LDPE) wiedergegeben. Die Art der Herstellung der Polymermischung ist bezüglich des MFI von untergeordneter Bedeutung, es wurden jeweils vergleichbare Resultate erhalten. Die Messwerte bei P(j) = 30 und 40% wurden bei einem Gewicht von 1kg gemessen und auf 3,8kg umgerechnet, sie stellen deshalb nur ungefähre Näherungswerte dar. Insbesondere bei P(j) = 40% war eine Messung des MFI sehr problematisch, da die Mischung von P(i) und P(j) bei 180°C eine Viskosität nahezu im Bereich von Wasser aufwies. Für solche Mischungen ist der MFI keine geeignete Charakterisierungsmethode, aber es kann dennoch gezeigt werden, dass der MFI um Grössenordnungen zunimmt, bei P(j) = 40% um einen Faktor von etwa 70. Somit können frei giessbare Harze erhalten werden. Die Zunahme des MFI ist jedoch auch bei geringen Anteilen von P(j) schon massiv. Bei P(j) = 3% nimmt der MFI um einen Faktor von 1,5 zu, bei P(j) = 7% um einen Faktor von rund 2. Dadurch kann bei der Verarbeitung von Polymeren, insbesondere von Polymeren mit hohem Molekulargewicht und entsprechend hoher Viskosität, entsprechend einem tiefen MFI ein neuer Freiheitsgrad gewonnen werden, d.h. eine hochmolekulare Schmelze P(i) kann durch Zusatz von P(j) mit einer Viskosität einer Schmelze von deutlich tieferem Molekulargewicht verarbeitet werden, wodurch sich bsw. die Schmelztemperatur besser kontrollieren, insbesondere reduzieren lässt und kürzere Prozesszeiten möglich sind, bsw. beim Spritzguss, wo ausserdem auch tiefere Drücke eingesetzt werden können. Somit kann also ein Polymer P(i) mit hohem oder sehr hohem Molekulargewicht bei Bedingungen verarbeitet werden, die für ein analoges Polymer mit deutlich tieferem Molekulargewicht typisch sind, während die vorteilhaften mechanischen Eigenschaften im Endprodukt des Polymers mit hohem oder sehr hohem Molekulargewicht erhalten bleiben oder sogar noch verbessert werden (vergl. Darstellungen 1 bis 3).

In Darstellung 5 ist der Einfluss des Molekulargewichts auf die Erhöhung des MFI [g/10min], gemessen bei 3,8kg und 180°C bei einem Anteil an P(j) von 7% wiedergegeben. Die Messwerte wurden für LDPE (P(i) und PE-Wachse (P(j)) mit Polydispersitäten um 1,1 erhalten, d.h. für nahezu monodisperse Molekulargewichtsverteilung. Mit abnehmendem Molekulargewicht von P(j) ist eine starke Zunahme des MFI zu beobachten. Viele PE-Wachse und Paraffine weisen eine relativ breite Molekulargewichtsverteilung mit Polydispersitäten bis hin zu etwa 20 auf, ihr Einfluss auf den MFI ist etwa vergleichbar mit dem Zusammenhang in Darstellung 5, wenn für deren Molekulargewicht das Gewichtsmittel eingesetzt wird (idealerweise das Viskositätsmittel). Während der Einfluss des Molekulargewichts von P(j) auf den MFI sehr ausgeprägt ist, werden die mechanischen Eigenschaften für Polymermischungen enthaltend PE-Wachse mit niedriger Polydispersität nur in vergleichsweise geringem Masse durch das Molekulargewicht dieser Wachse beeinflusst, bei einem Anteil an P(j) von 7% und Molekulargewichten bis etwa 2000 ist nahezu kein Einfluss des Molekulargewichts erkennbar, erst oberhalb 2000 steigen E-Modul, Yieldspannung und Bruchdehnung weiter an. Bei höheren Anteilen an PE-Wachsen sind höhere Molekulargewichte zunehmend vorteilhaft, was wahrscheinlich darauf zurückzuführen ist, dass infolge des höheren Molekulargewichts eine Phasenseparation von P(i) und P(j) beim Erstarren der Schmelze erschwert ist. Dieser Zusammenhang gilt auch für andere Wachse wie Paraffine.

In Darstellung 6 ist der Einfluss eines Spektrums verschiedener Typen von PE-Wachsen und Paraffinen auf MFI und E-Modul von LLDPE mit einer Dichte von 0,92g/cm³ wiedergegeben. Die entsprechenden Mischungen wurden mit P(j) = 7% mittels eines Brabender Kneters bei einer Mischzeit von 10min erhalten, d.h. die absoluten Werte der E-Moduli sind bei Extrusion der Mischungen typischerweise grösser, doch ist ein Vergleich der Effekte der verschiedenen Typen auch bei diesen Bedingungen gut möglich.

Die untersuchten Typen wiesen Molekulargewichte im Bereich 300 - 7000g/mol bei teilweise sehr breiten Molekulargewichtsverteilungen, Dichten im Bereich 0,89 - 0,99g/cm³, Schmelzpunkte im Bereich 50 - 132°C (Wachse können auch verschiedene Schmelzpunkte aufweisen) und Viskositäten bei Temperaturen von 140 - 150°C im Bereich 6 - 30'000cP auf. Der Einfluss des Molekulargewichts der Polymere P(j) auf den MFI wurde bereits erwähnt, der Einfluss der Viskosität ist analog. Bei gleich bleibendem P(j) ist der Einfluss auf die relative Erhöhung des MFI bei verschiedenen P(i) wie HDPE, LDPE, LLDPE, VLDPE, EVA, PP usw. vergleichbar. Bezüglich der mechanischen Eigenschaften jedoch bestehen teilweise grosse Unterschiede in der Wirkung verschiedener P(j) bei gleichem P(i) sowie in der Wirkung eines individuellen P(j) bei verschiedenen P(i). Bei der Untersuchung der zugrunde liegenden Gesetzmässigkeiten wurden folgende Tendenzen gefunden, wobei jedoch auch immer Abweichungen davon und Ausnahmen auftreten können und auch die Verarbeitungs- und Kristallisationsbedingungen eine Rolle spielen. Eine hohe Dichte von P(j) korreliert insbesondere bei enger Molekulargewichtsverteilung von P(j) mit dem Schmelzpunkt und führt zu einer deutlich erhöhten Kristallinität der Mischung mit P(i), wodurch E-Modul und Yieldspannung zunehmen, erstaunlicherweise ist dies auch breiter Molekulargewichtsverteilung der Fall, doch ist der Effekt üblicherweise weniger stark ausgeprägt, weshalb Molekulargewichtsverteilungen mit Polydispersitäten < 20 bevorzugt werden, insbesondere < 15, am bevorzugtesten < 10. Bei Wachsen ist die Molekulargewichtsverteilung oft nicht bekannt, sie spiegelt sich jedoch in der Breite des Schmelz- oder Erweichungsintervalls, wobei engere Intervalle bevorzugt sind. In der Kombination eines P(j) mit verschiedenen P(i) ist das Verhältnis des Polymerisationsgrades der Sequenzlänge von P(i), DPs(P(i) zum Polymerisationsgrad von P(j), DP(P(j)) bzw. äquivalent dazu das Verhältnis des Molekulargewichts der Sequenzlänge von P(i) zum Molekulargewicht von P(j) ein zentraler Parameter, sowie die Breite der Verteilungen von DPs(P(i)) und DP(P(j)). Sind DPs(P(i)) und DP(P(j)) monodispers und identisch, so sind die Bedingungen für eine vorteilhafte Heterokristallisation offensichtlich gegeben, ebenso bei ähnlichen Polydispersitäten, solange die Polydispersität nicht zu hoch ist. Ist etwa 1 < Q < 10 mit Q = DPs(P(i))/DP(P(j)) kann eine Heterokristallisation ebenfalls stattfinden, wobei der Schmelzpunkt der Heterokristallite in etwa dem Schmelzpunkt von P(i) entspricht, d.h. die Heterokristallite können einen auch sehr viel höheren Schmelzpunkt aufweisen als P(j), die Differenz kann durchaus 30 oder 40°C und mehr betragen. Mit Q > 10 ist eine Heterokristallisation weiterhin möglich, doch nimmt die Neigung zu Phasenseparation zu, insbesondere bei grösseren Anteilen an P(j). Die Phasenseparation kann durch eine hohe Abkühlgeschwindigkeit zumindest teilweise unterdrückt werden, kann aber gegebenenfalls auch bei Raumtemperatur noch stattfinden, insbesondere bei hohen Anteilen an P(j) und bei tiefen Molekulargewichten von P(j), weshalb Paraffine nachteilig sein können, die hohe sehr kurzkettige Anteile aufweisen. Von besonderem Interesse sind Werte von Q < 1. In diesem Fall bildet P(j) Kristallite von grösserer Lamellendicke als P(i), wobei die längerkettigen Sequenzen der Sequenzlängenverteilung von P(i) bevorzugt mit P(j) Heterokristallite bilden. Dadurch wird der Schmelzpunkt von P(i) angehoben, da die Schmelztemperatur Tm mit der Lamellendicke zunimmt. In Darstellung 7 sind die Schmelztemperaturen für PE-Wachse in Funktion des Molekulargewichts aufgetragen sowie die Schmelztemperaturen für PE in Funktion des Molekulargewichts der Sequenzen von PE. Daraus kann abgelesen werden, unter welchen Bedingungen der Schmelzpunkt von PE durch zumischen von P(j) erhöht werden kann.

### Legende

1) Aufbereitungsextruder
2) Feststoffdosierungseinrichtung für P(i)
3) Feststoffdosierungseinrichtung für P(j)
4) Strangdüse
5) Zweite Feststoffdosierungseinrichtung für P(j)
6) Vorcompound bzw. Masterbatch von P(i) und P(j)
7) Einwellenextruder
8) Feststoffdosierungseinrichtung für eine Pulver-Mischung aus P(i) und P(j)

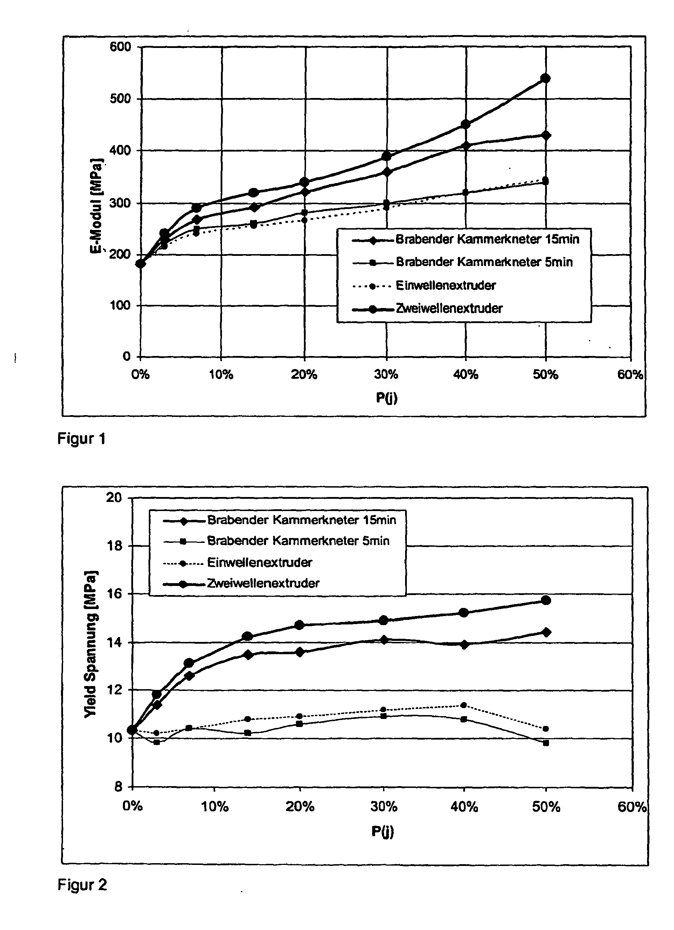

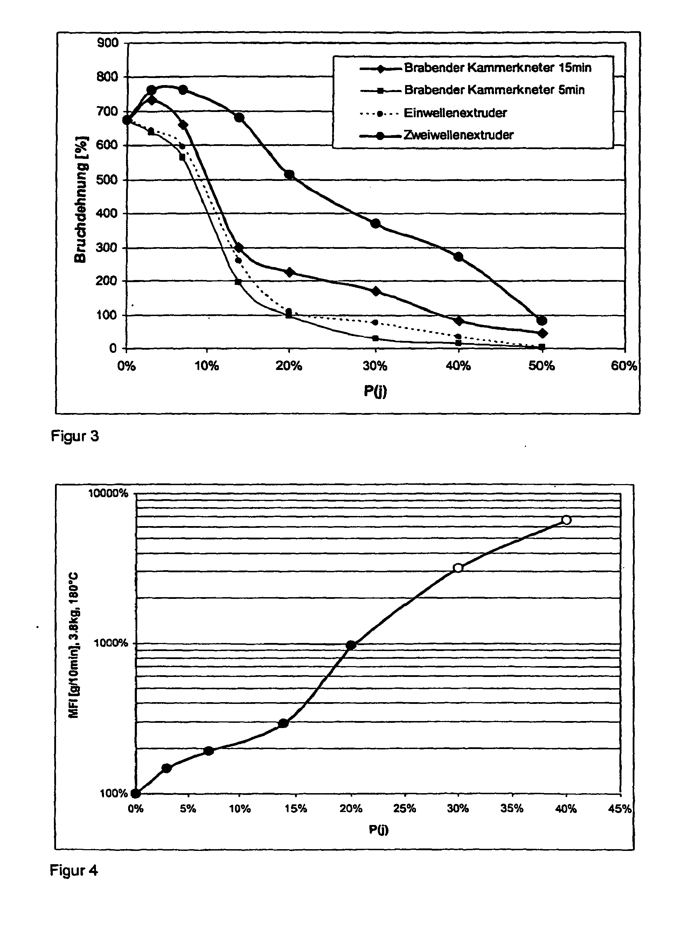

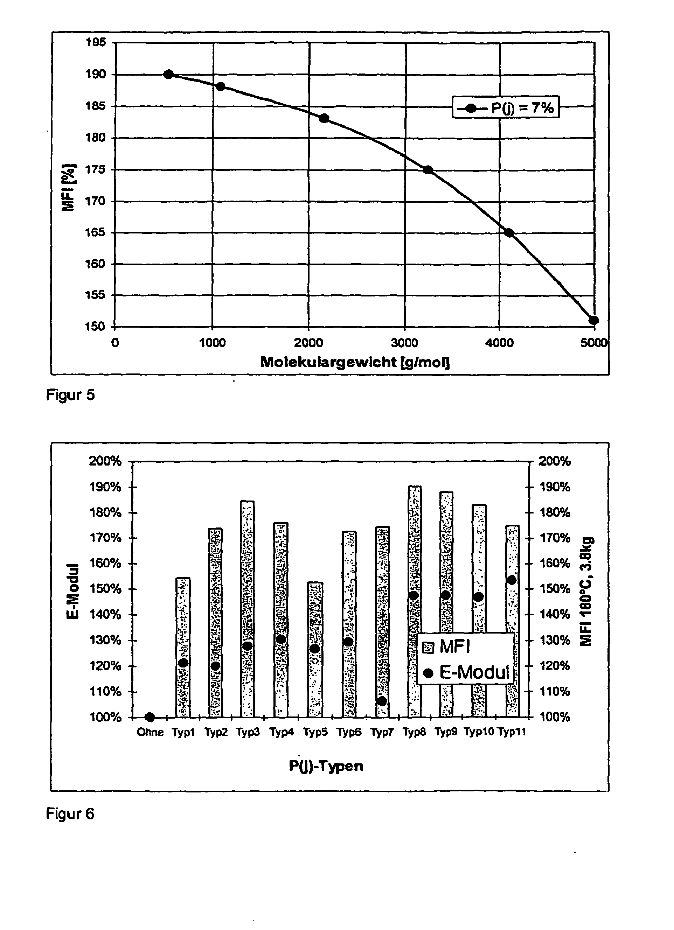

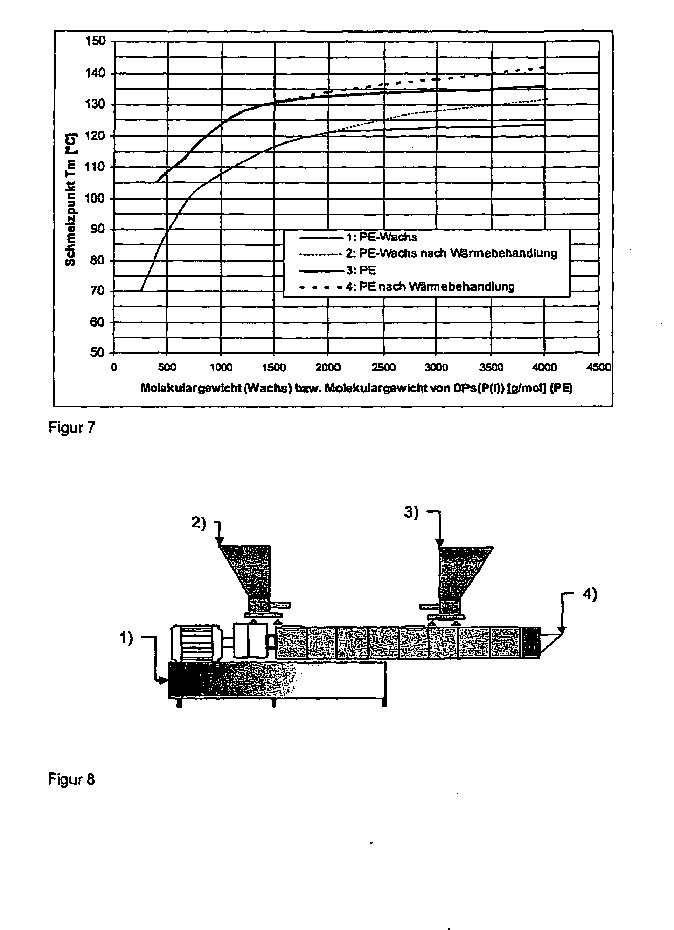

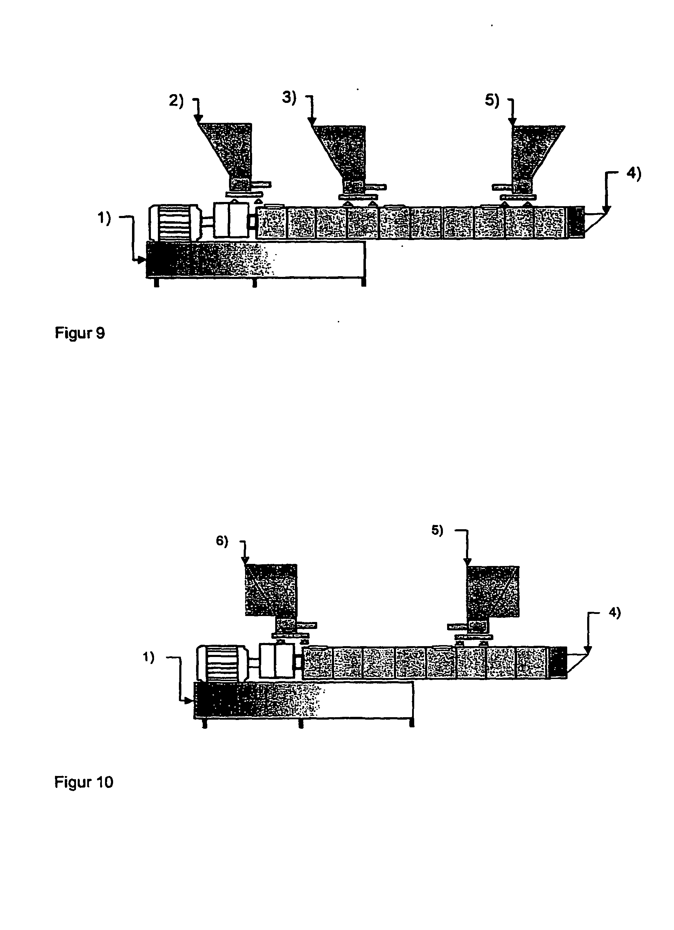

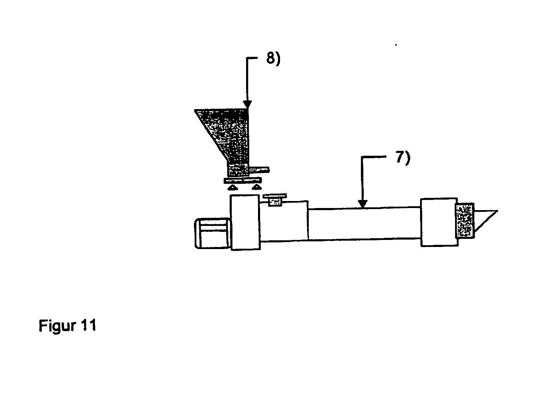

## Patentansprüche

1. Polymermischung, enthaltend mindestens ein synthetisches erstes Polymer P(i) und mindestens ein zweites Polymer P(j) und gegebenenfalls ein Quellungsmittel für P(i) und/oder P(j), **dadurch gekennzeichnet, dass** das Polymer P(i) einen Polymerisationsgrad DP(P(i)) > 500 und mindestens eine Art von kristallisierbaren Sequenzen A mit einem Polymerisationsgrad DPs (P(i)) dieser Sequenzen > 20 aufweist und das Polymer P(j) aus denselben Monomereinheiten aufgebaut ist wie die Sequenzen A von P(i) und der Polymerisationsgrad DP(P(j)) von P(j), 20 < DP(P(j)) < 500 ist und die Polymermischung ein aus einer molekulardispersen Mischung, enthaltend P(i) und P(j) unter Heterokristallisation ausgebildetes Netzwerk aufweist, wobei der Polymerisationsgrad kristallisierbarer Sequenzen durch Messung der Schmelzpunkte, die mit einem Perkin-Elmer 7 DSC an Filmproben beim ersten Aufheizvorgang als Peak-Temperaturen bestimmt werden, ermittelt wird, wobei die Heizrate bei 20°C/min liegt.

2. Polymermischung nach Anspruch 1, **dadurch gekennzeichnet, dass** bei vergleichbaren Verarbeitungsbedingungen von P(i) und von P(i) + P(j)
a) für den Quotient des E-Modul E(i, j) von P(i) +P(j) und des E-Moduls E(i) von P(i) gilt: 1,1 < E(i, j)/E(i) < 4; und/oder
b) für den Quotient der Yieldspannung sy(i, j) von P(i) + P(j) und der Yieldspannung sy(i) von P(i) gilt: 1,1 < sy(i, j)/sy(i) < 3,0; und gegebenenfalls
c) bei einem Anteil A(j) von P(j) bezogen auf P(i) + P(j) in Gew. % innerhalb des Intervals 1 < A(j) < 15 für den Quotient der Bruchdehnung eb(i, j) von P(i) + P(j) und der Bruchdehnung eb(i) von P(i) gilt: 1,01 < eb(i, j)/eb(i) < 1,5,
wobei für die Analyse von E-Modul, Yieldspannung und Bruchdehnung ein Instron Tensile Tester 4500 eingesetzt wird, die Proben aus Filmen ausgestanzt werden, und die Messlänge 13 mm, die Breite 2 mm und die Dehngeschwindigkeit 100 mm/min beträgt.

3. Polymermischung nach Anspruch 1 oder 2, **dadurch gekennzeichnet, dass** für den Quotient des MFI(i, j) der Mischung von P(i) + P(j) und des MFI(i) von P(i) gilt: 1,2 < MFI(i, j)/MFI(i) < 500.

4. Polymermischung nach einem der vorangehenden Ansprüche, **dadurch gekennzeichnet, dass** bei vergleichbaren Verarbeitungsbedingungen von P(i) und von P(i) + P(j) für den Quotient der Kristallinität K(i, j) von P(i) + P(j) und der Kristallinität K(i) von P(i) gilt: 1,03 < K(i, j)/K(i) < 3, wobei die Kristallinität durch Messung der Schmelzpunkte, die mit einem Perkin-Elmer 7 DSC an Filmproben beim ersten Aufheizvorgang als Peak-Temperaturen bestimmt werden, ermittelt wird, wobei die Heizrate bei 20°C/min liegt.

5. Polymermischung nach einem der vorangehenden Ansprüche, **dadurch gekennzeichnet, dass** der Anteil A(j) von P(j) bezogen auf P(i) + P(j) in Gew. % im Bereich 1 < A (j) < 90 liegt.

6. Polymermischung nach einem der vorangehenden Ansprüche, **dadurch gekennzeichnet, dass** P(i) einen Verzweigungsgrad < 3x10⁻² und P(j) einen Verzweigungsgrad < 5x10⁻² aufweist.

7. Polymermischung nach einem der vorangehenden Ansprüche, **dadurch gekennzeichnet, dass** P(j) eine Polydispersität < 30 aufweist.

8. Polymermischung nach einem der vorangehenden Ansprüche, **dadurch gekennzeichnet, dass** P(i) und/oder P(j) Langketten-Verzweigungen aufweisen, die einen Polymerisationsgrad > 20 aufweisen.

9. Polymermischung nach einem der vorangehenden Ansprüche, **dadurch gekennzeichnet, dass** P(i) bzw. die Sequenzen A von P(i) ein Polyolefin ist.

10. Polymermischung nach Anspruch 9, **dadurch gekennzeichnet, dass** P(i) bzw. die Sequenzen A von P(i) ein Polypropylen oder Polyethylen ist.

11. Polymermischung nach Anspruch 10, **dadurch gekennzeichnet, dass** P(i) bzw. die Sequenzen A von P(i) ausgewählt ist aus der Gruppe, bestehend aus VLDPE, LDPE, LLDPE, HDPE, HMWPE und UHMWPE.

12. Polymermischung nach einem der vorangehenden Ansprüche, **dadurch gekennzeichnet, dass** P(i) ein Polyolefin ist und P(j) aus folgenden Gruppen ausgewählt wird: n-Alkane CₙH₂ₙ₊₂; Iso-Alkane; zyklische Alkane CₙH₂ₙ; Polyethylen-Wachse; Paraffine und Paraffin-Wachse mineralischen Ursprungs wie makrokristalline, intermediate oder mikrokristalline Paraffine, spröde, duktile, elastische oder plastische mikrokristalline Paraffine; Paraffine und Paraffin-Wachse synthetischen Ursprungs; hyperverzweigte-Alphaolefine; Polypropylen-Wachse.

13. Polymermischung nach einem der Ansprüche 9 - 11, **dadurch gekennzeichnet, dass** P(j) eine Dichte in g/cm³ von > 0,9 aufweist und/oder P(j) einen Schmelz- oder Tropfpunkt in °C von > 80 aufweist.

14. Polymermischung nach einem der vorangehenden Ansprüche, **dadurch gekennzeichnet, dass** die Polymermischung in Form einer thermoplastischen Schmelze mittels eines dispersiv und distributiv wirkenden Mischaggregates hergestellt wird.

15. Polymermischung nach Anspruch 14, **dadurch gekennzeichnet, dass** die Polymermischung mittels eines Zweiwellenextruders oder eines Einwellenextruders mit Mischteil oder eines Busskokneters hergestellt wird.

16. Polymermischung nach Anspruch 14 oder 15, **dadurch gekennzeichnet, dass** die Polymermischung nach der Aufbereitung in Form von Granulat, Pellets, Pulver, Makro- oder Mikro-Fasern, als Film, Gussteil, Stranggussteil, Extrudat, Thermoformteil und dergleichen vorliegt.

## Claims

1. A polymer mixture containing at least one synthetic first polymer P(i) and at least one second polymer P(j), and optionally a swelling agent for P(i) and/or P(j), **characterised in that** the polymer P(i) has a degree of polymerisation DP(P(i)) > 500 and at least one type of crystallisable sequences A with a degree of polymerisation DPs (P(i)) of these sequences > 20 and the polymer P(j) is made from the same monomer units as the sequences A of P(i) and the degree of polymerisation DP(P(j)) of P(j) is 20 < DP(P(j)) < 500 and the polymer mixture comprises a network formed of a molecular dispersed mixture containing P(i) and P(j) by heterocrystallisation, wherein the degree of polymerisation of crystallisable sequences is established by measuring the melting points, which are determined as peak temperatures using a Perkin-Elmer 7 DSC on film samples during the first heating process, wherein the rate of heating is 20 °C/min.

2. The polymer mixture according to claim 1, **characterised in that** under comparable processing conditions of P(i) and of P(i) + P(j)
a) the following applies to the quotient of the modulus of elasticity E(i, j) of P(i) + P(j) and the modulus of elasticity E(i) of P(i): 1.1 < E(i, j)/E(i) < 4; and/or
b) the following applies to the quotient of the yield stress sy(i, j) of P(i) + P(j) and the yield stress sy(i) of P(i): 1.1 < sy(i, j)/sy(i) < 3.0; and optionally
c) with a portion A (j) of P (j) relative to P(i) + P(j) in % by weight within the interval 1 < A(j) < 15 the following applies to the quotient of the breaking elongation eb(i, j) of P(i) + P(j) and the breaking elongation eb(i) of P(i): 1.01 < eb(i, j)/eb(i) < 1.5,
wherein an Instron Tensile Tester 4500 is used for analysis of the modulus of elasticity, the yield stress and the breaking elongation, the samples are stamped out of films and the measuring length is 13 mm, the width 2 mm and the strain rate is 100 mm/min.

3. The polymer mixture according to claim 1 or 2, **characterised in that** the following applies to the quotient of the MFI(i, j) of the mixture of P(i) + P(j) and the MFI(i) of P(i): 1.2 < MFI(i, j)/MFI(i) < 500.

4. The polymer mixture according to any one of the preceding claims, **characterised in that** with comparable processing conditions of P(i) and P(i) + P(j) the following applies to the quotient of crystallinity K(i, j) of P(i) + P(j) and the crystallinity K(i) of P(i): 1.03 < K(i, j)/K(i) < 3, wherein the crystallinity is established by measuring the melting points, which are determined as peak temperatures using a Perkin-Elmer 7 DSC on film samples during the first heating process, wherein the rate of heating is 20 °C/min.

5. The polymer mixture according to any one of the preceding claims, **characterised in that** the portion A(j) of P(j) relative to P(i) + P(j) in % by weight is in the range 1 < A(j) < 90.

6. The polymer mixture according to any one of the preceding claims, **characterised in that** P(i) has a degree of branching < 3x10⁻² and P(j) has a degree of branching < 5x10⁻².

7. The polymer mixture according to any one of the preceding claims, **characterised in that** P(j) has a polydispersity < 30.

8. The polymer mixture according to any one of the preceding claims, **characterised in that** P(i) and/or P(j) have long-chain branches, which have a degree of polymerisation > 20.

9. The polymer mixture according to any one of the preceding claims, **characterised in that** P(i) or the sequences A of P(i) is a polyolefin.

10. The polymer mixture according to claim 9, **characterised in that** P(i) or the sequences A of P(i) is a polypropylene or a polyethylene.

11. The polymer mixture according to claim 10, **characterised in that** P(i) or the sequences A of P(i) is selected from the group consisting of VLDPE, LDPE, LLDPE, HDPE, HMWPE and UHMWPE.

12. The polymer mixture according to any one of the preceding claims, **characterised in that** P(i) is a polyolefin and P(j) is selected from the following groups: n-alkanes CₙH₂ₙ₊₂; iso-alkanes; cyclic alkanes CₙH₂ₙ; poly-ethylene waxes; paraffins and paraffin waxes of mineral origin, such as macrocrystalline, intermediate or microcrystalline paraffins, brittle, ductile, elastic or plastic microcrystalline paraffins; paraffins and paraffin waxes of synthetic origin; hyper-branched alphaolefins; propylene waxes.

13. The polymer mixture according to any one of the claims 9 - 11, **characterised in that** P(j) has a density in g/cm³ of > 0.9 and/or P(j) has a melting or drop point in °C of > 80.

14. The polymer mixture according to any one of the preceding claims, **characterised in that** the polymer mixture is produced in the form of a thermoplastic melt by means of a mixing unit with dispersive and distributive action.

15. The polymer mixture according to claim 14, **characterised in that** the polymer mixture is produced by means of a twin-screw extruder or a single-screw extruder with a mixing part or a Bussko kneader.

16. The polymer mixture according to claim 14 or 15, **characterised in that** following processing the polymer mixture exists in the form of granules, pellets, powder, macro or micro fibres, as a film, casting, continuous casting, extruded product, thermoformed part and similar.

## Revendications

1. Mélange de polymères, contenant au moins un premier polymère synthétique P(i) et au moins un deuxième polymère P(j) et, le cas échéant, un agent de gonflage pour le P(i) et/ou le P(j), **caractérisé en ce que** le polymère P(i) présente un degré de polymérisation DP(P(i)) > 500 et comporte au moins un type de séquences cristallisables A, lesdites séquences ayant un degré de polymérisation DPs(P(i)) > 20, et que le polymère P(j) est constitué des mêmes unités monomères que lesdites séquences A de P(i) et le degré de polymérisation DP(P(j)) de P(j) est 20 < DP(P(j)) < 500 et que ledit mélange de polymères comporte un réseau formé par hétérocristallisation à partir d'un mélange à dispersion moléculaire contenant du P(i) et du P(j), le degré de polymérisation des séquences cristallisables étant déterminé par mesure des points de fusion relevés, en tant que températures de pointe, lorsque des films servant d'échantillon subissent la première opération de réchauffement avec un Perkin-Elmer 7 DSC, le taux de chauffage étant de 20 °C/min.

2. Mélange de polymères selon la revendication 1, **caractérisé en ce que** l'on obtient, lorsque les conditions de transformation pour P(i) et pour P(i) + P(j) sont comparables, les résultats suivantes :
a) pour le quotient entre le module de Young E(i, j) de P(i) + P(j) et le module de Young E(i) de P(i): 1,1 < E(i, j)/E(i) < 4 ; et/ou
b) pour le quotient entre la limite d'élasticité sy(i, j) de P(i) + P(j) et la limité d'élasticité sy(i) de P(i) : 1,1 < sy(i, j)/sy(i) < 3,0 ; et le cas échéant
c) lorsque la proportion A(j) de P(j), en % en poids par rapport à P(i) + P(j), est comprise dans l'intervalle 1 < A(j) < 15, pour le quotient entre l'allongement à la rupture eb(i, j) de P(i) + P(j) et l'allongement à la rupture eb (i) de P(i) : 1,01 < eb(i, j)/eb(i) < 1,5,
les analyses du module de Young, de la limite d'élasticité et de l'allongement à la rupture étant effectuées sur un Instron Tensile Tester 4500, les échantillons étant découpés dans des films et la mesure portant sur une longueur de 13 mm, une largeur de 2 mm, avec une vitesse d'allongement de 100 mm/min.

3. Mélange de polymères selon les revendications 1 ou 2, **caractérisé en ce que** l'on obtient, pour le quotient entre les MFI(i, j) du mélange de P(i) + P(j) et les MFI(i) de P(i) : 1,2 < MFI(i, j)/MFI(i) < 500.

4. Mélange de polymères selon l'une des revendications précédentes, **caractérisé en ce que** l'on obtient, lorsque les conditions de transformation pour P(i) et pour P(i) + P(j) sont comparables, pour le quotient entre la cristallinité K(i, j) de P(i) + P(j) et la cristallinité K(i) de P(i) : 1,03 < K(i, j)/K(i) < 3, la cristallinité étant déterminée par mesure des points de fusion relevés, en tant que températures de pointe, lorsque des films servant d'échantillon subissent la première opération de réchauffement avec un Perkin-Elmer 7 DSC, le taux de chauffage étant de 20 °C/min.

5. Mélange de polymères selon l'une des revendications précédentes, **caractérisé en ce que** la proportion A(j) de P(j), en % en poids par rapport à P(i) + P(j), se situe dans la fourchette 1 < A(j) < 90.

6. Mélange de polymères selon l'une des revendications précédentes, **caractérisé en ce que** le P(i) présente un degré de ramification < 3 x 10⁻² et le P(j) présente un degré de ramification < 5 x 10⁻².

7. Mélange de polymères selon l'une des revendications précédentes, **caractérisé en ce que** le P(j) présente une polydispersité < 30.

8. Mélange de polymères selon l'une des revendications précédentes, **caractérisé en ce que** le P(i) et/ou le P(j) comportent des ramification à chaîne longue qui présentent un degré de polymérisation > 20.

9. Mélange de polymères selon l'une des revendications précédentes, **caractérisé en ce que** le P(i) ou, respectivement, les séquences A de (i) est une polyoléfine.

10. Mélange de polymères selon la revendication 9, **caractérisé en ce que** le P(i) ou, respectivement, les séquences A de P(i) est un polypropylène ou polyéthylène.

11. Mélange de polymères selon la revendication 10, **caractérisé en ce que** le P(i) ou, respectivement, les séquences A de P(i) est choisi dans le groupe constitué de PE-TBD, PE-BD, PE-BDL, PE-HD, PE-HPM et PE-UHPM.

12. Mélange de polymères selon l'une des revendications précédentes, **caractérisé en ce que** le P(i) est une polyoléfine et le P(j) est choisi dans les groupes suivants : les n-alcanes CₙH₂ₙ₊₂ ; les iso-alcanes; les alcanes cycliques CₙH₂ₙ ; les cires de polyéthylène ; les paraffines et les cires de paraffine d'd'origine minérales telles que les paraffines macrocristallines, intermédiaires ou microcristallines, les paraffines microcristallines cassantes, ductiles, élastiques ou plastiques ; les paraffines et cires de paraffine d'origine synthétique ; les alpha-oléfines à très haut degré de ramification ; les cires de polypropylène.

13. Mélange de polymères selon l'une des revendications 9 à 11, **caractérisé en ce que** le P(j) présente une densité en g/cm³ qui est > 0,9 et/ou le P(j) présente un point de fusion ou de goutte en °C qui est > 80.

14. Mélange de polymères selon l'une des revendications précédentes, **caractérisé en ce que** ledit mélange de polymères est préparé sous forme d'une matière thermoplastique en fusion, au moyen d'un appareil de mélange à action dispersive et distributive.

15. Mélange de polymères selon la revendication 14, **caractérisé en ce que** ledit Mélange de polymères est préparé au moyen d'une extrudeuse bi-vis ou d'une extrudeuse mono-vis pourvue d'une partie mélangeuse pour d'un malaxeur de type Bussko.

16. Mélange de polymères selon les revendications 14 ou 15, **caractérisé en ce que** ledit mélange de polymères se présente, après la transformation, sous forme de granulés, d'extrudés, de poudre, de macro- ou microfibres, d'un film, d'une pièce coulée, d'une pièce de coulée continue, d'une pièce extrudée, d'une pièce thermoformée ou sous une forme équivalente.
